Europäisches Patentamt

European Patent Office

Office européen des brevets

(11) Numéro de publication: **0 000 858**
A1

## (12) DEMANDE DE BREVET EUROPEEN

(21) Numéro de dépôt: **78810010.5**

(22) Date de dépôt: **19.07.78**

(51) Int. Cl.²: **G 03 B 27/62**

(30) Priorité: **22.07.77 CH 9031/77**

(43) Date de publication de la demande:
**21.02.79 Bulletin 79/4**

(84) Etats contractants désignés:
**BE DE FR GB LU NL SE**

(71) Demandeur: **Durand, Paul Auguste**
**13, Rue du Dr. Goldstein**
**F-95410 Groslay(FR)**

(72) Inventeur. **Durand, Paul Auguste**
**13, Rue du Dr. Goldstein**
**F-95410 Groslay(FR)**

(74) Mandataire: **Nithardt, Roland**
**En Plantaz**
**CH-1441 Valeyres S/s Montagny(CH)**

(54) **Appareil de poche pliable pour la reproduction de photographies ou d'autres documents.**

(57) La présente invention concerne un appareil de poche pliable pour la reproduction de photographies ou d'autres documents.

Cet appareil se compose d'un socle (4) en forme de U aux extrémités duquel sont articulés respectivement un support (2) destiné à porter un document (1) à reproduire et un support (8) pour un système optique (14). Le support (8) est agencé de telle manière que le système optique (14) puisse être adapté à l'objectif (11) d'un appareil photographique (12), par exemple un appareil photographique du type à développement instantané. En position de repos les deux supports (2 et 8) sont rabattus contre le socle (4). En position de travail ces deux supports sont déployés perpendiculairement au socle (4). Pour effectuer la reproduction d'un document, en particulier d'une photographie, il suffit d'adapter l'appareil à reproduire sur l'objectif de l'appareil photographique et de poser l'ensemble ainsi formé sur une surface au moins approximativement plane.

Cet appareil permet de résoudre de façon simple le problème du tirage multiple de photographies rélisées au moyen d'un appareil à développement instantané.

FIG. I

EP 0 000 858 A1

- 1 -

Appareil de poche pliable pour la reproduction de photographies ou d'autres documents

La présente invention concerne un appareil de poche pliable pour la reproduction de photographies ou d'autres documents.

Les moyens habituellement mis en oeuvre pour la reproduction rapide de documents, qu'ils soient au trait ou en demi-teintes, comportent l'emploi d'appareils coûteux, peu maniables et encombrants.

La présente invention se propose de remédier à cet inconvénient en réalisant un appareil de poche, léger, petit et peu coûteux, qui, associé à un appareil photographique, par exemple un appareil photographique du type à développement instantané, permet d'obtenir instantanément en tous lieux et à tous moments la reproduction d'un document.

Dans ce but l'appareil selon l'invention est caractérisé en ce qu'il comporte un système optique, un support pour un document, un support pour monter le système optique sur l'objectif d'un appareil photographique du type à développement instantané, et un socle reliant à distance prédéterminée le support du système optique au support du document, de manière à aligner sur l'axe optique de l'appareil photographique posé sur une surface plane, ledit système

- 2 -

optique et ledit document à reproduire.

La présente invention sera mieux compris en référence à la description d'un exemple de réalisation et au dessin annexé dans lequel :

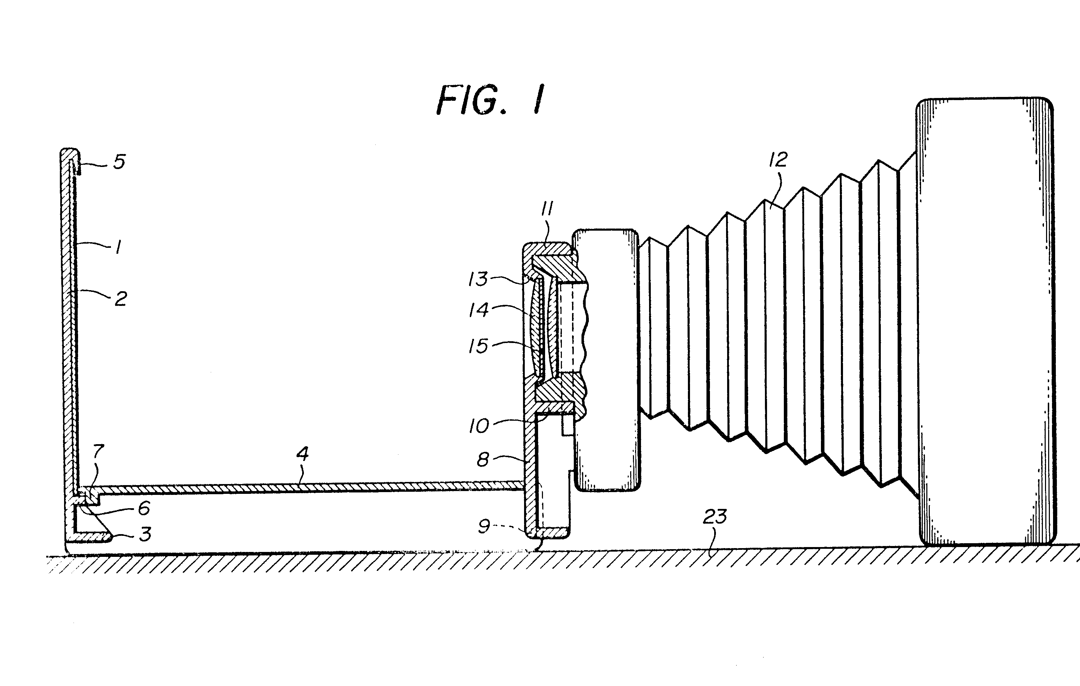

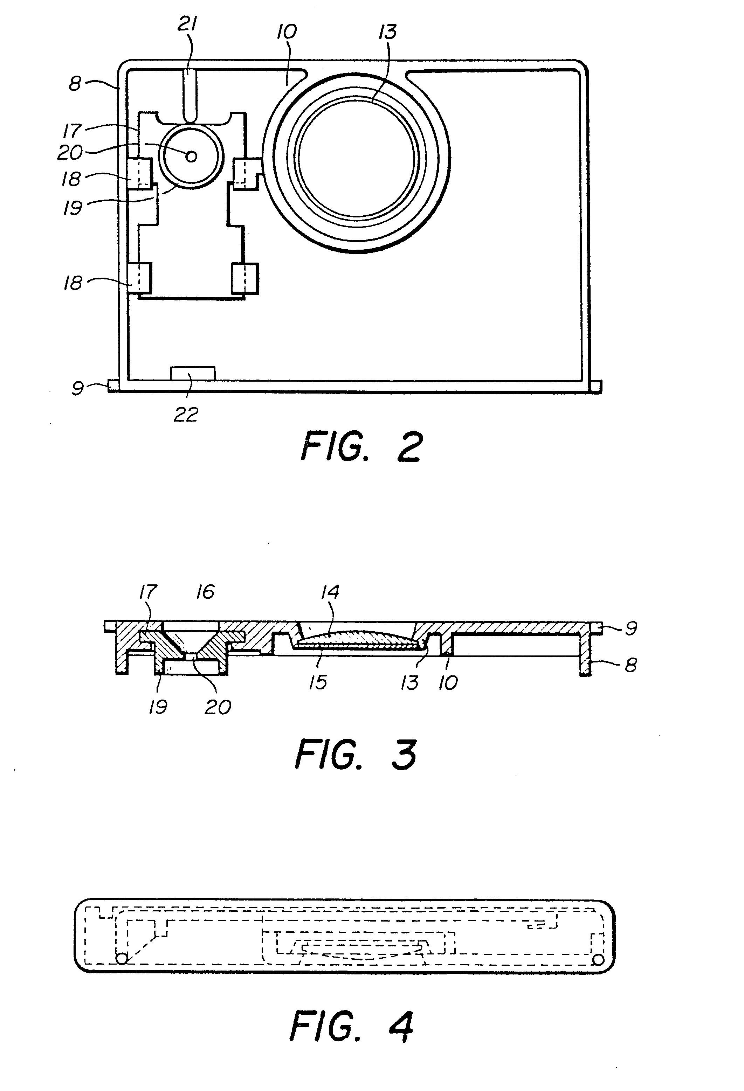

La figure 1 est une vue de profil et en coupe de l'appareil monté en position de travail sur un appareil photographique approprié; la figure 2 représente vu de face le support du sytème optique; la figure 3 est une vue de dessus de ce support coupé selon son axe et la figure 4 est une vue de l'appareil replié et recouvert d'un capot.

En référence aux figures, le document à reproduire est placé en 1 contre un support 2 articulé par les axes 3 sur le socle 4 en forme de U. Il est retenu en haut par des pattes 5 et est pincé en bas entre le support 2 et le socle 4 qui autorisent sa mise en place lorsque le bossage 6 prévu sur le support 2 vient butter contre le bossage 7 prévu sur le socle 4 pour assurer un positionnement du support 2 perpendiculaire au socle 4. A l'autre extrémité du socle 4 est articulé un support 8 au moyen d'axes 9. Au centre de ce support se trouve un bossage circulaire dont le diamètre intérieur correspond exactement au diamètre extérieur de l'objectif 11 d'un appareil photographique 12. A l'intérieur de ce bossage 10, et concentrique avec lui, se trouve un autre bossage 13 qui porte une lentille convergente, ou un ensemble de lentilles convergentes 14 et éventuellement un filtre coloré 15.

Si l'appareil photographique 12 comporte une cellule photoélectrique couplée, un trou 16 est pratiqué dans le support 8 pour laisser pénétrer dans ladite cellule photo-électrique la lumière diffusée par le document 1. Si le film dont est

chargé l'appareil photographique 12 est lent, ce qui est souvent le cas pour les films en couleurs, il y a intérêt à réduire, par exemple au moyen d'un diaphragme, la lumière qui pénètre dans la cellule. Ceci permet de travailler avec un diaphragme petit et rend admissible un système optique simplifié et une construction relativement peu précise. A cet effet, une pièce 17 coulisse contre le support 8 et sous des glissières 18. Elle porte un bossage 19 qui emboîte la lunette de la cellule photo-électrique de l'appareil photographique 12 et comporte un trou 20 dont le diamètre a été déterminé pour donner la pose correcte avec le diaphragme choisi pour l'objectif 11 de l'appareil photographique. Cette pièce 17 se trouve en place pour coiffer la cellule lorsqu'elle bute contre un bossage 21. Au contraire, elle découvre la totalité du trou 16 lorsqu'elle bute contre un bossage 22.

Cette pièce 17 peut en outre contenir un filtre coloré si, pour la reproduction de documents en couleurs, il est souhaitable de corriger le chromatisme de la lumière reçue par la cellule.

La hauteur du bossage 10 par rapport à la partie inférieure du socle 4 a été choisie pour que lorsque le support 8 est appliqué contre l'objectif de l'appareil photographique 12, la partie inférieure du socle 4 soit dans le même plan que la partie inférieure de l'appareil photographique 12. Il suffit donc de poser bout à bout l'appareil photographique 12 et l'appareil de reproduction, le tout étant posé sur une surface au moins approximativement plane et l'appareil de reproduction étant rendu solidaire de l'objectif 11 au moyen du bossage circulaire 10 pour obtenir un ensemble parfaitement aligné et stable. Cette stabilité obtenue par la combinaison de l'appareil de reproduction, de l'appareil photographique et d'un plan de liaison servant de suport,

- 4 -

autorise des temps de pose longs sans risque de bouger. Cela permet par exemple de faire travailler le système optique combiné comprenant l'objectif 11 et la lentille 14 avec un diaphragme très petit, ce qui donnera des reproductions nettes au moyen d'une solution optique sommaire et d'un ensemble socle et supports peu précis, par exemple réalisé en matière synthétique moulée.

Cette stabilité permet aussi d'armer et déclencher plusieurs fois l'obturateur pour une seule exposition sans risque de bouger.

La puissance de la lentille 14 constituant le système optique de l'appareil a été choisie de telle façon que lorsque l'appareil photographique 12 se trouve dans sa gamme de réglage, la mise au point correcte assure la reproduction du document 1 à l'échelle désirée, par exemple l'échelle 1/1.

De préférence l'appareil photographique 12 est un appareil à développement instantané. De ce fait le document 1 est reproduit de façon extrêmement simple et quasi instantanée. Cet appareil constitue un accessoire utile pour les utilisateurs d'appareils photographiques à développement instantané du fait qu'il permet le tirage multiple d'une même prise de vue.

Lorsque l'opération de reproduction est terminée, le support 2 est basculé entre les côtés du socle 4, de même que le support 8. Ensuite un capot 25 est placé entre les côtés du socle 4, ce capot ayant comme le socle la forme d'un U, les deux U étant croisés. On constitue ainsi une petite boîte rectangulaire fermée qui se loge facilement dans une poche. L'utilisation et le fonctionnement du dispositif se font selon le processus suivant :

Le support 2 étant à demi-ouvert, le document 1 est glissé en haut sous les pattes 5 pour s'appuyer en bas sur le bossage 6. Le support 2 est alors amené en butée perpendiculairement au socle 4, de même que le support 8. Le dispositif ainsi déployé est ensuite monté sur l'objectif de l'appareil photographique, le tout étant posé sur une surface plane comme décrit précédemment. Il suffit alors de déclencher l'obturateur de l'appareil photographique 12 pour effectuer une prise de vue pour reproduire le document 1 de façon instantanée, à condition bien entendu que l'appareil photographique soit un appareil du type à développement instantané. La rigidité et la stabilité de l'ensemble sont obtenues par la combinaison simple de l'appareil photographique 12, de l'appareil à reproduire et d'une surface plane servant de support. L'appareil selon l'invention est peu coûteux et résoud en particulier le problème de la reproduction ou du tirage multiple de photographies prises avec un appareil photographique du type à développement instantané.

- 1 -

Revendications de brevet

1. Appareil de poche pliable pour la reproduction de photographies ou d'autres documents, caractérisé en ce qu'il comporte un système optique, un support pour un document, un support pour monter le système optique sur l'objectif d'un appareil photographique du type à développement instantané, et un socle reliant à distance prédéterminée le support du système optique au support du document, de manière à aligner sur l'axe optique de l'appareil photographique posé sur une surface plane, ledit système optique et ledit document à reproduire.

2. Appareil selon la revendication 1, caractérisé en ce que le système optique est un système convergent, la distance focale du système combiné résultant de l'adjonction dudit système avec l'objectif de l'appareil photographique étant telle que le document placé sur son support à ladite distance prédéterminée soit reproductible à l'échelle 1/1.

3. Appareil selon les revendications 1 et 2, caractérisé en ce que le support du document à reproduire comporte des glissères pour permettre le maintien à la distance prédéterminée du document à reproduire dans un plan perpendiculaire à l'axe optique dudit système optique combiné.

4. Appareil selon les revendications 1 à 3, caractérisé en ce que le support du document à reproduire, le support du système optique et le corps de l'appareil photographique ont leurs bases respectives localisées au moins approximativement dans un même plan parallèle à l'axe optique du système combiné, de telle manière que lorsque l'appareil est monté sur l'appareil photographique, et que l'ensemble ainsi formé est posé sur une surface plane, le document à reproduire soit positionné dans le champ du système optique combiné,

perpendiculairement à son axe optique.

5. Appareil selon les revendications 1 à 3, caractérisé en ce que le socle et le support du document d'une part, et le socle et le support du système optique d'autre part, sont liés au moyen d'articulations permettant de replier les deux supports à plat sur ledit socle.

6. Appareil selon la revendication 5, caractérisé en ce qu'il comporte d'autre part un capot destiné à fermer l'ensemble socle et supports repliés.

7. Appareil selon les revendications 1, 2 et 5, caractérisé en ce que le système optique comporte un filtre coloré.

8. Appareil selon les revendications 1, 2 et 5, caractérisé en ce qu'il comporte un diaphragme pour atténuer la lumière reçue par un cellule photo-électrique couplée de l'appareil photographique.

FIG. 1

FIG. 2

FIG. 3

FIG. 4

**BAD ORIGINAL**

900858

**Office européen des brevets**

## RAPPORT DE RECHERCHE EUROPEENNE

Numero de la demande

EP 78 81 0010

| | DOCUMENTS CONSIDERES COMME PERTINENTS | | CLASSEMENT DE LA DEMANDE (Int Cl²) |
|---|---|---|---|

| Catégorie | Citation du document avec indication, en cas de besoin des parties pertinentes | Revendica tion concernée | |
|---|---|---|---|
| X | US – A – 3 622 239 (H.B.MILLER) <br> * Ensemble du document * <br><br> -- | 1-3,5 | G 03 B 27/62 |
| | FR – A – 2 212 047 (L.A.DINE et al.) <br> * Page 2, lignes 5-29 * <br><br> -- | 1,4,8 | |
| | US – A – 3 687 030 (L.A.DINE et al.) <br> * Figures 4 à 6 * <br><br> ------- | 1 | |

**DOMAINES TECHNIQUES RECHERCHES (Int. Cl.²)**

G 03 B 27/62

**CATEGORIE DES DOCUMENTS CITES**

X: particulièrement pertinent
A: arrière-plan technologique
O: divulgation non-écrite
P: document intercalaire
T: théorie ou principe a la base de l'invention
E: demande faisant interference
D: document cite dans la demande
L: document cité pour d'autres raisons

&: membre de la meme famille document correspondant

Le present rapport de recherche a ete etabli pour toutes les revendications

| Lieu de la recherche | Date d'achèvement de la recherche | Examinateur |
|---|---|---|
| La Haye | 30-10-1978 | WEYLAND |

OEB Form 1503 1   06.78